# EUROPEAN PATENT APPLICATION

(11) **EP 4 601 053 A1**
(43) Date of publication of application: **13.08.2025**
(21) Application number: 25155173.5
(22) Date of filing: 31.01.2025
(51) Int. Cl.: H01M 8/0232, C25B 1/04, C25B 9/60, H01M 8/0245, H01M 8/12

(54) **ELECTROCHEMICAL CELL STACKS INCLUDING MULTI-DIAMETER MESH CONTACT LAYER**

(30) Priority: 08.02.2024 US 202463551271 P
(71) Applicant: Bloom Energy Corporation, San Jose, CA 95134 (US)
(72) Inventor: GASDA, Michael, San Jose, 95134 (US); ARMSTRONG, Tad, San Jose, 95134 (US); LU, Zigui, San Jose, 95134 (US)
(74) Representative: Wichmann, Hendrik

(57) **Abstract**

An electrochemical cell stack includes at least two electrochemical cells that each contain a fuel electrode, an air electrode, and an electrolyte located between the fuel electrode and the air electrode, at least one interconnect located between the at least two electrochemical cells, and a contact layer that electrically connects the at least one interconnect and the fuel electrode of an adjacent one of the at least two electrochemical cells. The contact layer includes first wires that extend in a first direction, the first wires including thinner first wires and thicker first wires, the thicker first wires having a thickness that is larger than a thickness of the thinner first wires, and second wires that extend in a second direction different from the first direction.

## Description

### FIELD

Aspects of the present disclosure relate generally to electrochemical cell stacks, and in particular, to fuel cell or electrolyzer cell stacks including mesh contact layers comprising interwoven first and second wires having different diameters.

### BACKGROUND

A typical electrochemical cell stack, such as a fuel cell or electrolyzer cell stack, includes multiple fuel cells separated by electrically conductive interconnects (IC) which provide both electrical connection between adjacent cells in the stack and channels for delivery and removal of fuel and oxidant.

### SUMMARY

According to various embodiments, an electrochemical cell stack includes at least two electrochemical cells that each contain a fuel electrode, an air electrode, and an electrolyte located between the fuel electrode and the air electrode, at least one interconnect located between the at least two electrochemical cells, and a contact layer that electrically connects the at least one interconnect and the fuel electrode of an adjacent one of the at least two electrochemical cells. The contact layer includes first wires that extend in a first direction, the first wires including thinner first wires and thicker first wires, the thicker first wires having a thickness that is larger than a thickness of the thinner first wires, and second wires that extend in a second direction different from the first direction.

According to various embodiments, an electrochemical cell stack includes at least two electrochemical cells that each contain a fuel electrode, an air electrode, and an electrolyte located between the fuel electrode and the air electrode, at least one interconnect located between the at least two electrochemical cells, and a contact layer that electrically connects the at least one interconnect and the fuel electrode of an adjacent one of the at least two electrochemical cells. The contact layer includes first wires that extend in a first direction, the first wires comprising a first material having a first hardness; and second wires that extend in a second direction different from the first direction, the second wires comprising a second material having a second hardness less than the first hardness.

According to various embodiments, an electrochemical cell stack includes at least two electrochemical cells that each contain a fuel electrode, an air electrode, and an electrolyte located between the fuel electrode and the air electrode, at least one interconnect located between the at least two electrochemical cells, and a contact layer that electrically connects the at least one interconnect and the fuel electrode of an adjacent one of the at least two electrochemical cells. The contact layer includes first wires that extend in a first direction, the first wires having a first wire density; and second wires that extend in a second direction different from the first direction, the second wires having a second wire density different than the first density.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.
FIG. 1A is a perspective view of an electrochemical cell stack, according to various embodiments of the present disclosure.
FIG. 1B is a cross-sectional view of a portion of the stack of FIG. 1A.
FIG. 2A is a top view of an air side of an interconnect, according to various embodiments of the present disclosure.
FIG. 2B is a top view of a fuel side of the interconnect of FIG. 2A.
FIG. 3A is a three dimensional view of an electrochemical cell column, according to various embodiments of the present disclosure, and FIG. 3B is a vertical cross-sectional view of a portion of the column of FIG. 3A.
FIGS. 3C, 3D, 3E, 3F, 3G, 3H, 3I and 3J are perspective views of various weaves that may be used for mesh contact layers of the embodiments of the present disclosure.
FIG. 4 is a top view of a contact layer, according to an embodiment of the present disclosure.
FIG. 5 is a top view of an alternative contact layer, according to an alternative embodiment of the present disclosure.
FIG. 6 is a top view of an alternative contact layer, according to an alternative embodiment of the present disclosure.
FIG. 7 is a top view of an alternative contact layer, according to an alternative embodiment of the present disclosure.
FIG. 8 is a top view of an alternative contact layer, according to an alternative embodiment of the present disclosure.
FIG. 9 is a top view of an alternative contact layer, according to an alternative embodiment of the present disclosure.
FIG. 10 is a top view of an alternative contact layer, according to an alternative embodiment of the present disclosure.

### DETAILED DESCRIPTION

The various embodiments will be described in detail with reference to the accompanying drawings. The drawings are not necessarily to scale, and are intended to illustrate various features of the invention. Wherever possible, the same reference numbers will be used throughout the drawings to refer to the same or like parts. References made to particular examples and implementations are for illustrative purposes and are not intended to limit the scope of the invention or the claims.

Ranges can be expressed herein as from "about" one particular value, and/or to "about" another particular value. When such a range is expressed, examples include from the one particular value and/or to the other particular value. Similarly, when values are expressed as approximations, by use of the antecedent "about" or "substantially" it will be understood that the particular value forms another aspect. In some embodiments, a value of "about X" may include values of +/- 1% X. It will be further understood that the endpoints of each of the ranges are significant both in relation to the other endpoint, and independently of the other endpoint.

Electrochemical cell systems include fuel cell and electrolyzer cell systems. In a high temperature fuel cell system, such as a solid oxide fuel cell (SOFC) system, an oxidizing flow is directed to the cathode side of the fuel cell while a fuel flow is directed to the anode side of the fuel cell. The oxidizing flow is typically air, while the fuel flow can be a hydrogen (H₂) or a hydrocarbon fuel, such as methane, natural gas, ethanol, or methanol, or a hydrogen containing fuel, such as ammonia. The fuel cell, operating at a typical temperature between 750°C and 950°C, enables the transport of negatively charged oxygen ions from the cathode flow stream to the anode flow stream, where the oxygen ions combine with either free hydrogen or hydrogen in a hydrocarbon molecule to form water vapor and/or with carbon monoxide to form carbon dioxide. The excess electrons from the negatively charged ions are routed back to the cathode side of the fuel cell through an electrical circuit completed between anode and cathode, resulting in an electrical current flow through the circuit. In an electrolyzer system, such as a solid oxide electrolyzer system, water (e.g., steam) is separated into hydrogen and oxygen by applying a voltage across the electrolyzer cells.

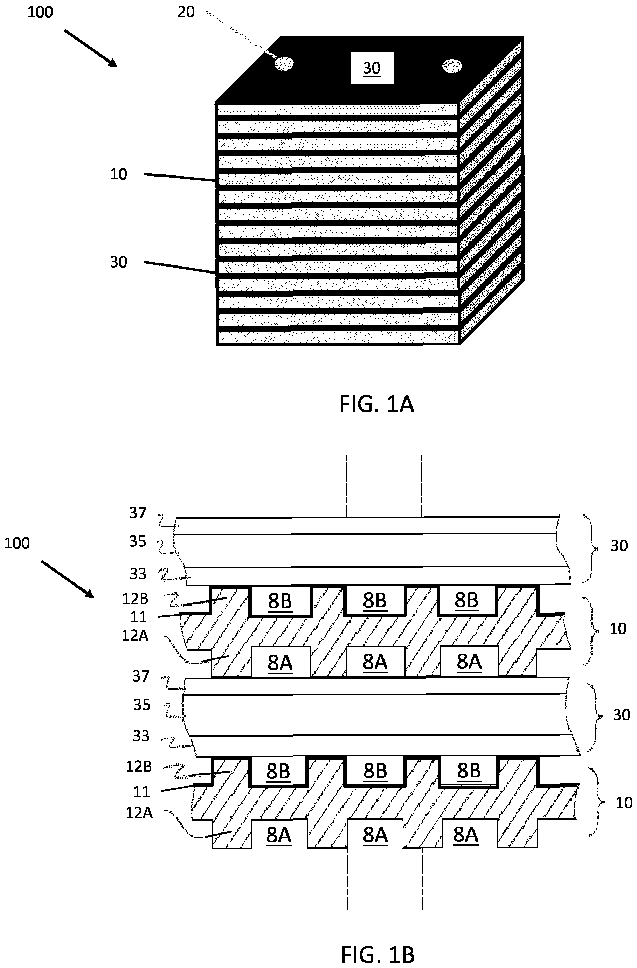

FIG. 1A is a perspective view of an electrochemical cell stack 100, and FIG. 1B is a sectional view of a portion of the stack 100, according to various embodiments of the present disclosure. However, it should be noted that the stack 100 may also be operated as an electrolyzer cell stack (e.g., a solid oxide electrolyzer cell (SOEC) stack). In the SOEC stack, the anode is the air electrode and the cathode is the fuel electrode. Thus, the electrode to which the fuel (e.g., hydrogen or hydrocarbon fuel in a SOFC, and water/steam in a SOEC) is supplied may be referred to as the fuel electrode and the opposing electrode may be referred to as the air electrode in both SOFC and SOEC cells.

Referring to FIGS. 1A and 1B, the stack 100 includes electrochemical cells (e.g., fuel cells or electrolyzer cells) 30 separated by interconnects 10. Referring to FIG. 1B, each cell 30 comprises an air electrode 33, a solid oxide electrolyte 35, and a fuel electrode 37.

Various materials may be used for the air electrode 33, electrolyte 35, and fuel electrode 37. For example, the fuel electrode 37 of a SOFC or SOEC may comprise a cermet comprising a nickel containing phase and a ceramic phase. The nickel containing phase may consist entirely of nickel in a reduced state. This phase may form nickel oxide when it is in an oxidized state. Thus, the fuel electrode 37 is preferably annealed in a reducing atmosphere prior to operation to reduce the nickel oxide to nickel. The nickel containing phase may include other metals in addition to nickel and/or nickel alloys. The ceramic phase may comprise a stabilized zirconia, such as yttria and/or scandia stabilized zirconia and/or a doped ceria, such as gadolinia, yttria and/or samaria doped ceria.

The electrolyte 35 of a SOFC or SOEC may include scandia stabilized zirconia (SSZ), yttria stabilized zirconia (YSZ), yttria-ceria-stabilized zirconia (YCSZ), ytterbia-ceria-scandia-stabilized zirconia (YbCSSZ), or blends thereof. In YbCSSZ, scandia may be present in an amount equal to 9 to 11 mol %, such as 10 mol %, ceria may present in amount greater than 0 and equal to or less than 3 mol %, for example 0.5 mol % to 2.5 mol %, such as 1 mol %, and ytterbia may be present in an amount greater than 0 and equal to or less than 2.5 mol %, for example 0.5 mol % to 2 mol %, such as 1 mol %, as disclosed in U.S. Pat. No. 8,580,456, which is incorporated herein by reference. Alternatively, the electrolyte 35 may comprise another ionically conductive material, such as a doped ceria.

The air electrode 33 of a SOFC or SOEC may comprise an electrically conductive material, such as an electrically conductive perovskite material, such as lanthanum strontium manganite (LSM). Other conductive perovskites, such as lanthanum strontium cobaltite, etc., or metals, such as Pt, may also be used. The air electrode 33 may also contain a ceramic phase similar to the fuel electrode 37. The electrodes and the electrolyte may each comprise one or more sublayers of one or more of the above described materials.

Electrochemical cell stacks 100 are frequently built from a multiplicity of electrochemical cells 30 in the form of planar elements, tubes, or other geometries. Although the stack in FIG. 1A is vertically oriented, the stacks may be oriented horizontally or in any other direction. Fuel and air may be provided to the electrochemically active surfaces of the fuel cells 30. For example, fuel may be provided through fuel holes 20 formed in each interconnect 10. The fuel holes 20 may be aligned to form fuel conduits (i.e., fuel riser channels) that extend through the stack 100.

Each interconnect 10 electrically connects adjacent cells 30 in the stack 100. In particular, an interconnect 10 may electrically connect the fuel electrode 37 of one cell 30 to the air electrode 33 of an adjacent cell 30. FIG. 1B shows that the lower cell 30 is located between two interconnects 10.

Each interconnect 10 includes fuel ribs 12A that at least partially define fuel channels 8A and air ribs 12B that at least partially define oxidant (e.g., air) channels 8B. The interconnect 10 may operate as a gas-fuel separator that separates a fuel flowing to the fuel electrode 37 of one cell in the stack from oxidant, such as air, flowing to the air electrode 33 of an adjacent cell in the stack.

Each interconnect 10 may be made of or may contain electrically conductive material, such as a metal alloy (e.g., chromium-iron alloy) which has a similar coefficient of thermal expansion to that of the solid oxide electrolyte in the cells 30 (e.g., a difference of 0-10%). For example, the interconnects 10 may comprise a metal (e.g., a chromium-iron alloy, such as 4-6 weight percent iron, optionally 1 or less weight percent yttrium and balance chromium). An electrically conductive contact layer 11, which may be formed of an electrically conductive material, such as lanthanum strontium manganite (LSM) and/or a spinel manganese cobalt oxide (MCO), may be provided on an air side of each interconnect 10.

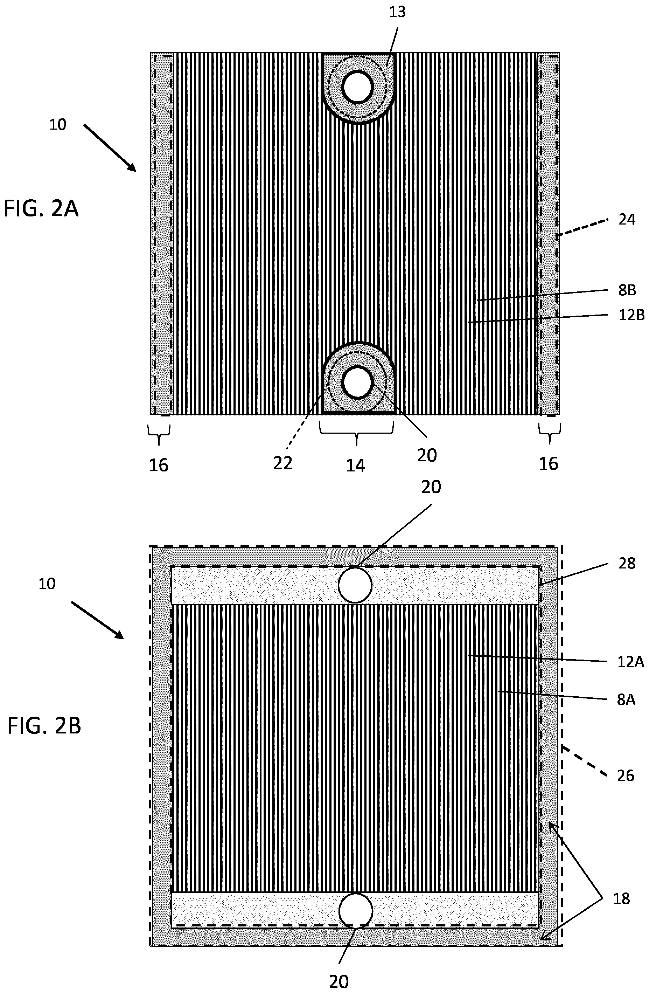

FIG. 2A is a top view of the air side of an exemplary interconnect 10, and FIG. 2B is a top view of a fuel side of the interconnect 10, according to an embodiment of the present disclosure. Referring to FIGS. 1B and 2A, the air side includes air channels 8B located between air ribs 12B. Air flows through the air channels 8B to the air electrode 33 of an adjacent cell 30. The interconnect 10 may include ring seal regions 14 and strip seal regions 16. The seal regions 14, 16 may be flat surfaces that are coplanar with the tops of the air ribs 12B. Fuel holes 20 may be formed in the ring seal regions 14 and may extend through the interconnect 10. Ring seals 22 may be disposed on the ring seal regions 14 surrounding the fuel holes 20, to prevent fuel from contacting an adjacent air electrode 33. Strip seals 24 may be disposed on the strip seal regions 16. The seals 22, 24 may be formed of a glass or glass-ceramic material. The strip seal regions 16 may be an elevated plateau which does not include ribs or channels.

In some embodiments, a corrosion barrier layer (CBL) 13 (FIG. 2A) may be formed between the contact layer 11 (FIG. 1B) and the ring seals 22. The CBL 13 may be formed of a glass-ceramic composite material configured to limit diffusion of manganese and/or manganese species from the contact layer 11 into the adjacent glass seals, such as the ring seals 22. The CBL 13 may include crystalline phases distributed in a glassy (e.g., amorphous) matrix phase. In some embodiments, the crystalline phase may include zirconium silicate (ZrSiO₄) crystals and/or magnesium aluminosilicate crystals, such as barium magnesium aluminosilicate crystals or barium free magnesium aluminosilicate crystals. The crystalline phase may additionally include calcium silicate crystals, such as calcium magnesium silicate crystals, calcium aluminosilicate crystals and/or magnesium-free and aluminum-free calcium silicate crystals.

Referring to FIGS. 1B and 2B, the fuel side of the interconnect 10 may include the fuel channels 8A located between fuel ribs 12A, and fuel manifolds 28, which are surrounded by a frame seal region 18. The frame seal region 18 may be a flat region that is coplanar with the tops of the fuel ribs 12A. Fuel flows from one of the fuel holes 20 (e.g., inlet hole that forms part of the fuel inlet riser), into the adjacent manifold 28, through the fuel channels 8A, and to the fuel electrode 37 of an adjacent fuel cell 30. Excess fuel may flow into the other fuel manifold 28 and then into the other (e.g., outlet) fuel hole 20. A frame seal 26 may be disposed on the frame seal region 18. The frame seal 26 may be formed of a glass or glass-ceramic material.

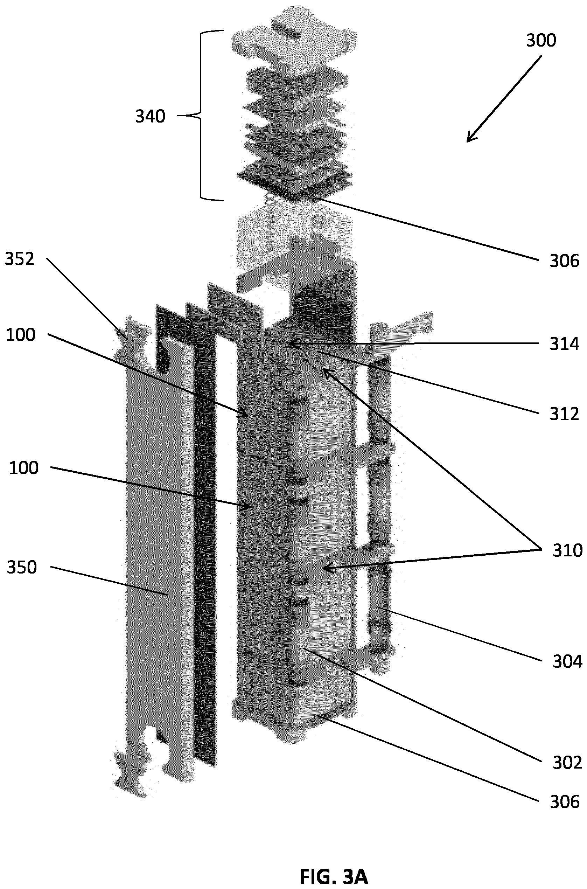

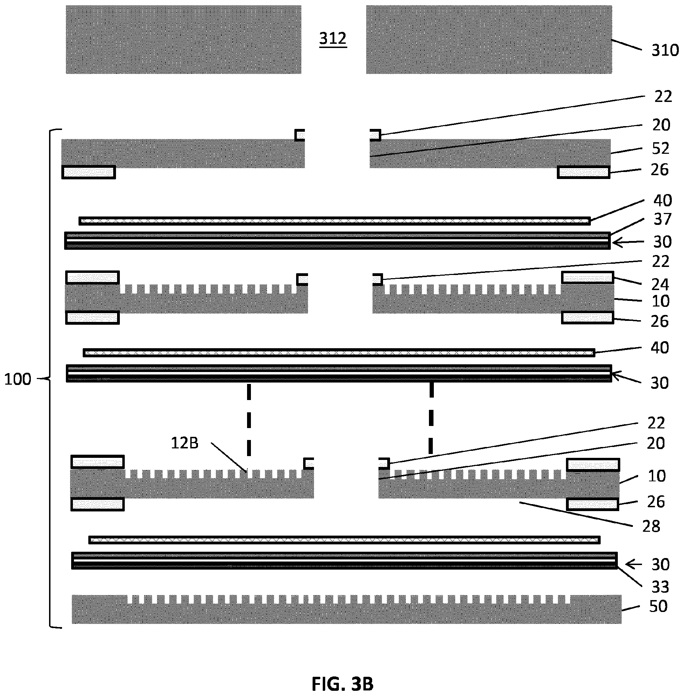

FIG. 3A is a perspective view of a fuel cell column 300, according to various embodiments of the present disclosure, and FIG. 3B is an exploded cross-sectional view of a portion of the fuel cell column 300.

Referring to FIGS. 3A and 3B, the fuel cell column 300 may include one electrochemical cell stack 100 or multiple electrochemical cell stacks 100, an optional fuel inlet conduit 302, an optional fuel exhaust conduit 304, termination plates 306, and optional fuel manifolds 310 (e.g., anode splitter plates). The fuel inlet conduit 302 is fluidly connected to the fuel manifolds 310 and is configured to provide the fuel feed to each fuel manifold 310, and fuel exhaust conduit 304 is fluidly connected to the fuel manifolds 310 and is configured to receive a fuel exhaust from each of the fuel manifolds 310.

The fuel manifolds 310 may be disposed between the stacks 100 and may be configured to provide a fuel feed to the stacks 100 and to receive a fuel exhaust from the stacks 100. For example, the fuel manifolds 310 may be fluidly connected to internal fuel riser channels formed by aligning the fuel holes 20 of the interconnects 10, as discussed above and illustrated in FIG. 1A. In particular, the fuel manifolds 310 may include fuel holes 312 that are vertically aligned with the riser channels/fuel holes 20, and fuel channels 314 that fluidly connect the fuel holes 312 and the fuel inlet conduit 302 and the fuel exhaust conduit 304.

The fuel cell column 300 may also include a compression assembly 340 and side baffles 350 disposed on opposing sides of the stacked fuel cells 100. The side baffles 350 may be formed of a ceramic material and may be connected to the compression assembly 340 and an underlying stack component (not shown) by ceramic connectors 352. The compression assembly 340 may be configured to apply pressure to and/or compress the column, so as to seal the adjacent components of the column.

As shown in FIG. 3B, each stack 100 may also include an air end plate 50 disposed at an air side of the stack 100 and a fuel end plate 52 disposed at a fuel side end of the stack 100. In particular, the fuel end plate 52 may be disposed on the fuel electrode 37 of an outermost (e.g., uppermost or lowermost) cell 30 of the stack 100, and the air end plate 50 may be disposed on the air electrode 33 of an outermost (e.g., uppermost or lowermost) cell 30 of the stack 100.

The stacks 100 may also include contact layers 40 compressed between the fuel side of each interconnect 10 and the fuel electrode 37 of the adjacent cell 30. A contact layer 40 may also be compressed between the fuel end plate 52 and the fuel electrode 37 of the adjacent cell 30. The contact layers 40 may be configured to maintain the electrical contact through thermal, current, and/or redox cycles. The contact layers 40 may also be configured to accommodate shape and/or thickness mismatch when under compression in the stacks 100.

The fuel cell stacks, columns and interconnects variously illustrated in FIGS. 1A, 1B, 2A, 2B, 3A and 3B are exemplary implementations. Other stack and column configurations are within the scope of the present invention. For instance, the contact layers of the embodiments of the present disclosure can be used with interconnects and columns configured like those disclosed in United States Patent Nos. 11,355,762, 11,705,557, and 11,870,121, all of which are incorporated herein by reference in their entirety.

In each of the various stack, column and interconnect embodiments, the contact layers 40 may each comprise at least one mesh of interwoven metal wires. The wires may be formed of one or more compliant electrically conductive materials that are resistant to high temperatures and chemical reactions, such as nickel and/or nickel alloys. Suitable nickel alloys include nickel-manganese alloys, such as Nickel 211 or 212, and nickel-copper alloys, such as Monel 400, 401, 404, R405, or K500.

The composition ranges of the Nickel 211 and 212 alloys are shown in weight percent in Table 1 below:

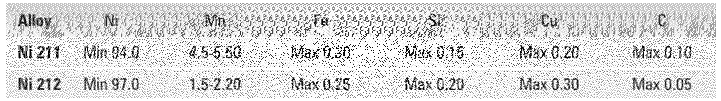

The composition ranges of the Monel 400, 401, 404, R405, and K500 alloys are shown in weight percent in Table 2 below:

| **Monel Alloys** | | **Ni** | **Cu** | **C** | **Mn** | **Fe** | **Co** | **S** | **Si** | **At** | **Ti** |
|---|---|---|---|---|---|---|---|---|---|---|---|
| Monel 400 | Max | - | 34.0 | 0.3 | 2.0 | 2.5 | - | 0.024 | 0.5 | - | - |
| | Min | 63.0 | 28.0 | - | - | - | - | - | - | - | - |
| Monel 401 | Max | 45.0 | Balance | 0.1 | 2.25 | 0.75 | 0.25 | 0.0015 | 0.25 | - | - |
| | Min | 40.0 | - | - | - | - | - | - | - | - | - |
| Monel 404 | Max | 51.0 | Balance | 0.15 | 0.1 | 0.5 | - | 0.024 | 0.1 | 0.05 | - |
| | Min | 52.0 | - | - | - | - | - | - | - | - | - |
| Monel R405 | Max | - | 34.2 | 0.3 | 2.0 | 2.5 | - | 0.60 | 0.5 | - | - |
| | Min | 63.0 | 28.0 | - | - | - | - | 0.025 | - | - | - |
| Monel K500 | Max | - | 33.0 | 0.18 | 1.5 | 2.0 | 0.25 | 0.006 | 0.5 | 3.15 | 0.85 |
| | Min | 63.0 | 27.0 | - | - | - | - | - | - | 2.3 | 0.35 |

In particular, the contact layers 40 may include first wires that extend in a first direction and second wires that extend in a second direction that is different from the first direction and that are interwoven with the first wires. In one embodiment, the first and the second directions may be perpendicular to each other. In another embodiment, the first and the second directions may be non-parallel and non-perpendicular to each other. For example, the first direction and the second direction may extend at an angle of at least 10 and less than 90 degrees with respect to each other, such as at least 45 and less than 90 degrees with respect to each other, including at least 60 and less than 90 degrees with respect to each other. In some embodiments, the first and second directions may be different ones of a warp direction and a weft direction of a mesh.

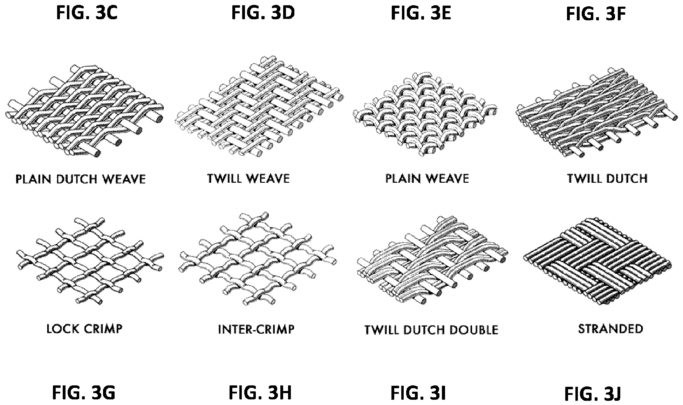

The contact layers 40 may be woven in any suitable weave pattern, such as a plain Dutch weave, a twill weave, a square mesh weave (also referred to as a plain weave), a twill Dutch weave, a lock crimp weave, an inter-crimp weave, a twill Dutch double weave or a stranded weave, as shown in FIGS. 3C, 3D, 3E, 3F, 3G, 3H, 3I and 3J, respectively. The contact layers 40 may have wire a density ranging from about 25 to about 150 wires per inch, such as a density ranging from about 35 to about 100 wires per inch, or about 50 wires per inch. In one embodiment, the wire density may be at least 50 wires per inch, such as 50 to 150 wires per inch.

For example, a contact layer 40 may have an initial (i.e., uncompressed) thickness that is approximately equal to a maximum combined thickness of the first and second wires. When a force is applied to compress the contact layer 40, resistance to the compression is initially localized at crossing points (e.g., knuckles) of the first and second wires, resulting in wire deformation at the crossing points. Further compression of the contact layer includes additional force since the compression is resisted by the deformed crossing points and the remainders of the first and second wires.

If a contact layer 40 mesh includes first and second wires having the same thickness, a force vs. displacement/deformation curve of this contact layer may increase exponentially, resulting in an undesirable relatively steep curve. In contrast, contact layers 40 of various embodiments may have a shallower force vs. displacement/deformation curve by utilizing different thickness and/or different material wires.

In a first embodiment, the first wires may comprise plural wires having different wire thicknesses from each other. The second wires may comprise plural wires which optionally also have different wire thicknesses from each other. Specifically, during the compression of the contact layer 40, the two thicker wire knuckles engage first, then the thicker and thinner wire knuckles engage with increasing compression, and finally the two thinner wire knuckles engage. The different thickness wires provide the contact layers 40 with desired properties, such as low hysteresis, a shallow force vs. displacement/deformation curve, and a high number of contact points.

In a second embodiment, the first wires and the second wires are formed of different metals or metal alloys from each other, which may have different hardness and/or creep properties. For example, the second wires may be formed of a relatively soft material, such as pure nickel, and the first wires may be formed of a harder material, such as a nickel alloy containing manganese or copper. In one aspect of the second embodiment, the second wires may comprise denser wires (i.e., having a higher numerical density) than the first wires.

In a third embodiment, the wires may have a different thickness of the first embodiment and the different material composition of the second embodiment. In one aspect of the third embodiment, the contact layers 40 may include thinner wires formed of a relatively soft material, such as pure nickel, and thicker wires formed of a harder material, such as a nickel alloy containing manganese or copper. The force required for compression of such contact layer may increase more gradually as compared to a mesh contact layer comprising the same thickness and same material composition wires. For example, a softer alloy, such as pure nickel can be used with a thinner or higher numerical density of wires. In the plain Dutch twill weave shown in FIG. 3C, where a thicker wire is used in the warp direction, and a fine wire is used in the weft direction, the harder alloy, such as Ni 212, is used in the warp wires, and the soften material, such as pure nickel, is used in the weft wires.

In a fourth embodiment, the wires may have a different wire density in the warp and weft directions. Optionally, the denser wires may be thinner and/or softer than the sparser wires.

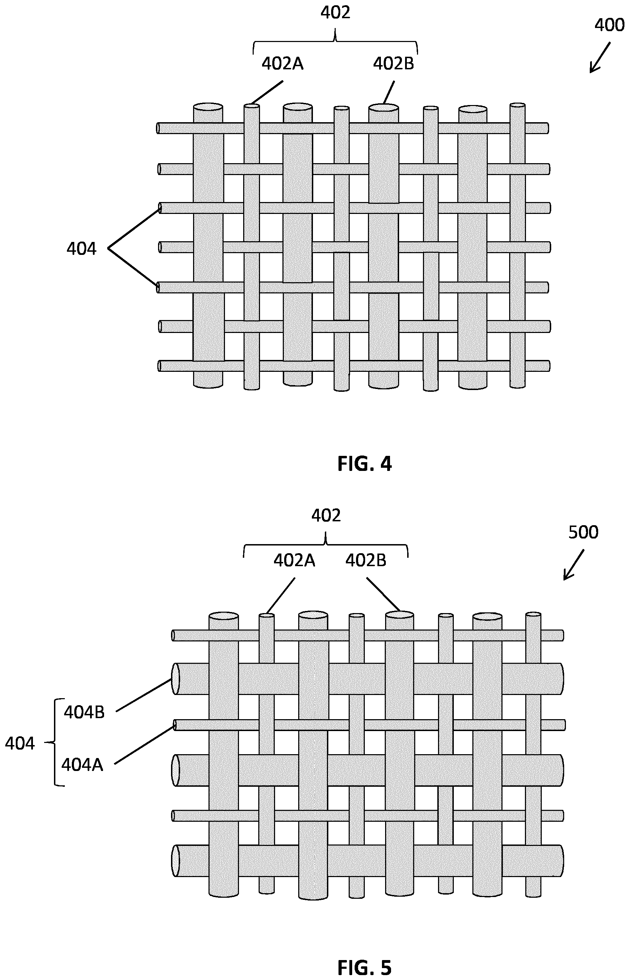

FIG. 4 is a top view of an exemplary contact layer 400 that may be included in electrochemical cell stacks according to the first embodiment of the present disclosure. Referring to FIG. 4, the contact layer 400 may comprise a square mesh of interwoven first wires 402 and second wires 404. The first wires 402 may extend in a first direction (e.g., may comprise warp wires or weft wires), and the second wires 404 may extend in a second direction substantially perpendicular to the first direction (e.g., may comprise the other ones of the warp wires or the weft wires). The first and second wires 402, 404 may be formed of a material independently selected from nickel, a nickel alloy as discussed above, a combination thereof, or the like.

The first wires 402 may include thinner first wires 402A and thicker first wires 402B which are thicker than the thinner first wires 402A. The thicker first wires 402B may have a diameter that is greater than the diameter of the thinner first wires 402A. For example, the diameters of the thicker first wires 402B may be greater than diameters of the thinner first wires 402A by at least 10 microns, such as by about 20 µm to about 50 µm, such as by about 30 µm to about 40 µm. In one embodiment, the thinner and thicker first wires 402A, 404B may be alternately disposed in the contact layer 400.

In one embodiment, the thinner first wires 402A may have a diameter ranging from about 25 µm to about 75 µm, such as from about 35 µm to about 65 µm, or about 45 µm to about 55 µm, such as about 50 µm. In one embodiment, the diameter of the thinner first wires 402A may be the same or about the same as the diameter of the second wires 404. The thicker first wires 402B may have a diameter ranging from about 50 µm to about 100 µm, such as from about 65 µm to about 95 µm, or about 75 µm to about 85 µm, such as about 80 µm.

The thinner and thicker first wires 402A, 402B may decrease an amount of force needed to initially compress the contact layer 400. In particular, the combination of the thinner and thicker first wires 402A, 404B may allow for a greater range of plastic deformation in the contact layer 400, permitting the contact layer 400 to accommodate greater range of thickness variation when compressed.

In some embodiments, the thinner first wires 402A may be formed of pure nickel or a relatively soft nickel alloy, and the thicker first wires 402B may be formed of a relatively hard nickel alloy having a higher hardness than the material of the thinner first wires 402A. The first wires 402 and the second wires 404 may have the same wire density or different wire density from each other.

In the embodiment of FIG. 4, the second wires 404 may have substantially the same diameter as each other. For example, the diameter of the second wires 404 may range from about 25 µm to about 75 µm, such as from about 35 µm to about 65 µm, or about 45 µm to about 55 µm, such as about 50 µm. In some embodiments, the second wires 404 may be formed of pure nickel.

FIG. 5 is a top view of an alternative contact layer 500 that may be included in electrochemical cell stacks, according to an alternative embodiment of the present disclosure. The contact layer 500 may be similar to the contact layer 400. Accordingly, only the differences therebetween will be discussed in detail.

Referring to FIG. 5, the first wires 402 of the contact layer 500 may include alternately disposed thinner first wires 402A and thicker first wires 402B as described above, and the second wires 404 of the contact layer 500 may also include alternately disposed thinner second wires 404A and thicker second wires 404B.

The diameters of the thicker second wires 404B may be greater than diameters of the thinner second wires 404A by at least 10 microns, such as by about 20 µm to about 50 µm, such as by about 30 µm to about 40 µm. In one embodiment, the thinner and thicker second wires 404A, 404B may be alternately disposed in the contact layer 500. The thinner second wires 404A may have a diameter ranging from about 25 µm to about 75 µm, such as from about 35 µm to about 65 µm, or about 45 µm to about 55 µm, such as about 50 µm. The thicker second wires 404B may have a diameter ranging from about 50 µm to about 100 µm, such as from about 65 µm to about 95 µm, or about 75 µm to about 85 µm, such as about 80 µm. The inclusion of thinner and thicker wires in both the first wires 402 and the second wires 404 may further improve the mechanical properties of the contact layer 500.

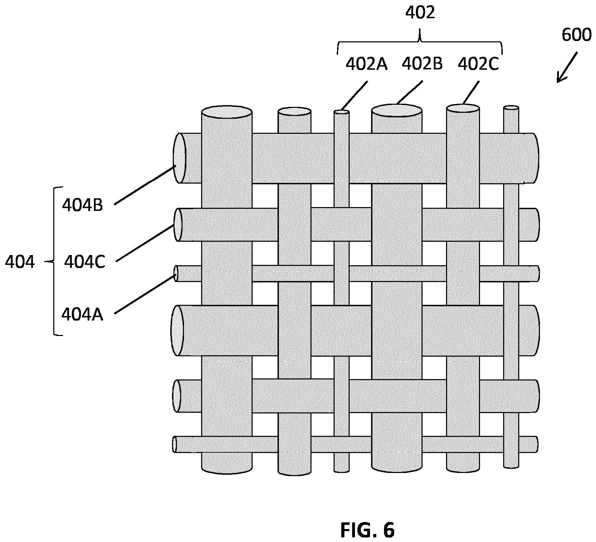

FIG. 6 is a top view of an alternative contact layer 600 that may be included in electrochemical cell stacks, according to an alternative embodiment of the present disclosure. The contact layer 600 may be similar to the contact layer 500. Accordingly, only the differences therebetween will be discussed in detail.

Referring to FIG. 6, the first wires 402 of the contact layer 600 may include alternately disposed thinner first wires 402A, intermediate first wires 402C, and thicker first wires 402B. The intermediate first wires 402C may have a diameter that is between the diameter of the thinner first wires 402A and the diameter thicker first wires 402B. The diameters of the thinner first wires 402A, intermediate first wires 402C, and thicker first wires 402B may differ from each other by at least 5 microns, such as by from about 5 µm to about 40 µm, such as by from about 10 µm to about 20 µm.

For example, the thinner first wires 402A may have a diameter ranging from about 25 µm to about 75 µm, such as from about 35 µm to about 65 µm, or about 45 µm to about 55 µm, such as about 50 µm. The thicker first wires 402B may have a diameter ranging from about 50 µm to about 100 µm, such as from about 65 µm to about 95 µm, or about 75 µm to about 85 µm, such as about 80 µm. The intermediate first wires 402C may have a diameter ranging from about 40 µm to about 90 µm, such as from about 50 µm to about 80 µm, or about 60 µm to about 70 µm, such as about 60 µm to 65 µm.

The second wires 404 of the contact layer 600 may include alternately disposed thinner second wires 404A, intermediate second wires 404C, and thicker second wires 404B. The intermediate second wires 404C may have a larger diameter than the thinner second wires 404A and a smaller diameter than the thicker second wires 404B. The diameters of the thin second wires 404A, intermediate second wires 404C, and thick second wires 404B may differ from each other by at least 5 microns, such as by from about 5 µm to about 40 µm, such as by from about 10 µm to about 20 µm.

For example, the thinner second wires 404A may have a diameter ranging from about 25 µm to about 75 µm, such as from about 35 µm to about 65 µm, or about 45 µm to about 55 µm, such as about 50 µm. The thicker second wires 404B may have a diameter ranging from about 50 µm to about 100 µm, such as from about 65 µm to about 95 µm, or about 75 µm to about 85 µm, such as about 80 µm. The intermediate second wires 404C may have a diameter ranging from about 40 µm to about 90 µm, such as from about 50 µm to about 80 µm, or about 60 µm to about 70 µm, such as about 60 µm to 65 µm.

Accordingly, the contact layer 600 may include the first wires 402 having three different diameters and the second wires 404 having three different diameters, in order to further improve the mechanical properties of the contact layer 600.

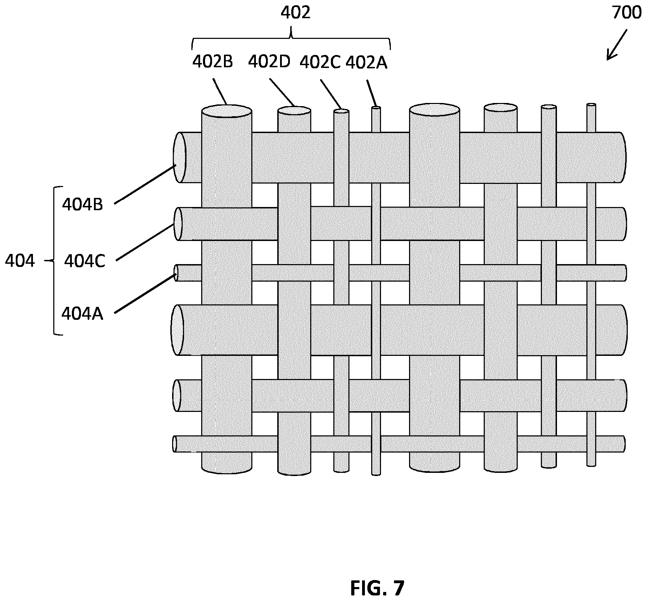

FIG. 7 is a top view of an alternative contact layer 700 that may be included in electrochemical cell stacks, according to an alternative embodiment of the present disclosure. The contact layer 700 may be similar to the contact layer 600. Accordingly, only the differences therebetween will be discussed in detail.

Referring to FIG. 7, the first wires 402 of the contact layer 700 may include alternately disposed thinner first wires 402A, thinner intermediate first wires 402C, thicker intermediate first wires 402D, and thicker first wires 402B. In some embodiments, the diameters of the thinner first wires 402A, thinner intermediate first wires 402C, thicker intermediate first wires 402D, and thicker first wires 402B differ from each other by at least 5 microns, such as by from about 5 µm to about 40 µm, such as by from about 10 µm to about 20 µm.

For example, the thinner first wires 402A may have a diameter ranging from about 25 µm to about 75 µm, such as from about 35 µm to about 65 µm, or about 45 µm to about 55 µm, such as about 50 µm. The thicker first wires 402B may have a diameter ranging from about 50 µm to about 100 µm, such as from about 65 µm to about 95 µm, or about 75 µm to about 85 µm, such as about 80 µm.

The thinner intermediate first wires 402C may have a larger diameter than the thinner first wires 402A and a smaller diameter than the thicker first wires 402B. For example, the thinner intermediate first wires 402C may have a diameter ranging from about 40 µm to about 80 µm, such as from about 50 µm to about 70 µm, such as about 60 µm.

The thicker intermediate first wires 402D may have a larger diameter than the thinner intermediate first wires 402C and a smaller diameter than the thicker first wires 402B. For example, the thicker intermediate first wires 402D may have a diameter ranging from about 50 µm to about 80 µm, such as from about 50 µm to about 80 µm, such as about 70 µm.

However, in other embodiments the number of different diameter wires may be varied. For example, the first wires 402 and/or the second wires 404 may include wires having 4 or more different diameters. In other embodiments, the first and second wires 402, 404 may have different numbers of wire diameters. For example, the first wires 402 may all have the same diameter, and the second wires 404 may include wires of three or more different diameters. In an alternative configuration, the first wires 402 may include wires of two different diameters, and the second wires 404 may include wires of three or more different diameters.

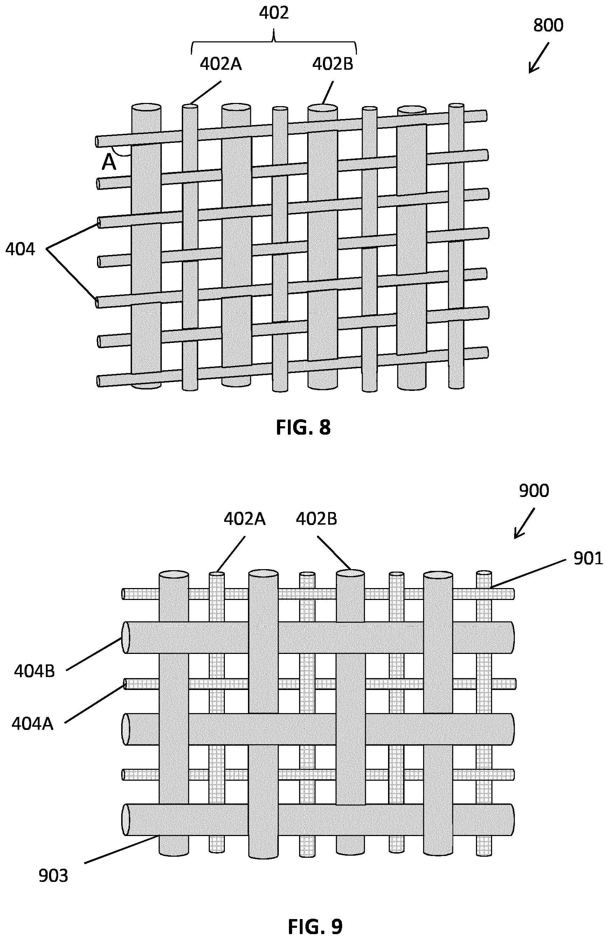

FIG. 8 is a top view of an alternative contact layer 800 that may be included in electrochemical cell stacks, according to an alternative embodiment of the present disclosure. The contact layer 800 may be similar to the contact layer 400. Accordingly, only the differences therebetween will be discussed in detail.

The above described contact layer 400 comprises first wires 402 and second wires 404 which extend in respective first and second directions that are perpendicular to each other (i.e., the first wires 402 extend at an angle 90 degrees with respect to the second wires 404). In the alternative contact layer 800, the first wires 402 and the second wires 404 extend in respective first and second directions that are non-parallel and non-perpendicular to each other. For example, the first direction and the second direction may extend at an angle "A" of at least 10 and less than 90 degrees with respect to each other, such as at least 45 and less than 90 degrees with respect to each other, including at least 60 and less than 90 degrees with respect to each other. Thus, the first wires 402 and the second wires 404 may be non-parallel and non-perpendicular with respect to each other. In other alternative embodiments, the first wires 402 and the second wires 404 in the contact layers 500, 600 or 700 may also be non-parallel and non-perpendicular with respect to each other.

FIG. 9 is a top view of an alternative contact layer 900 that may be included in electrochemical cell stacks, according to an alternative embodiment of the present disclosure. The contact layer 900 may be similar to the contact layer 500. Accordingly, only the differences therebetween will be discussed in detail.

The above described contact layers 400, 500, 600, 700 and 800 comprise a single wire mesh having different wire thicknesses and/or different materials and in which the first and the second wires are interwoven with each other. In contrast, the alternative contact layer 900 comprises two different wire meshes 901 and 903 one of which is located over the other one. Thus, the first wire mesh 901 comprises at least some of the second wires 404 (e.g., the thinner second wires 404A) interwoven with the thinner first wires 402A. The second wire mesh 903 comprises additional wires (e.g., the thicker second wires 404B or portions of the second wires 404) interwoven with the thicker first wires 402B. The wires of the first mesh 901 are laterally offset from the wires of the second mesh 903. Furthermore, the first wires 402A of the first mesh 901 may be parallel or non-parallel to the first wires 402B of the second mesh 903. Likewise, the second wires 404A of the first mesh 901 may be parallel or non-parallel to the second wires 404B of the second mesh 903. Any one of the above described contact layers 400, 500, 600, 700 and/or 800 may comprise two or more different wire meshes which are positioned one over the other, but are not interwoven with each other.

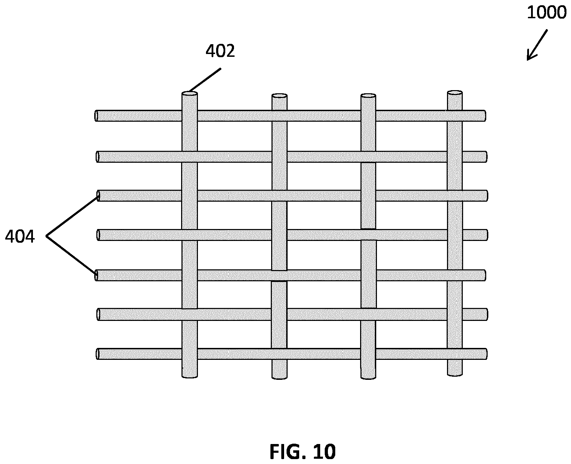

FIG. 10 is a top view of an alternative contact layer 1000 that may be included in electrochemical cell stacks, according to an alternative embodiment of the present disclosure. The contact layer 1000 may be similar to the contact layer 400. Accordingly, only the differences therebetween will be discussed in detail.

In the contact layer 1000, the first wires 402 have a first wire density, and the second wires 404 have a second wire density different than the first density. For example, the second density may be higher than the first density. The first wire density may range from about 25 to about 75 wires per inch, and the second wire density may range from about 50 to about 150 wires per inch.

In one embodiment, the first wires 402 may comprise the warp wires and the second wires 404 may comprise the weft wires. In one embodiment, the first wires 402 may have the same thickness (e.g., diameter) and the same material composition as the second wires 404. In another embodiment, the first wires 402 may have a different thickness (e.g., diameter) and/or a different material composition from the second wires 404. For example, the first wires 402 may be thinner than and/or softer than the second wires 404.

Any one or more features from any one or more embodiments may be used in any suitable combination with any one or more features from one or more of the other embodiments. For example, the contact layer 40 may include any combination of features found in the contact layers 400, 500, 600, 700, 800, 900 and/or 1000. Furthermore, while the square weave is shown in FIGS. 4 to 10 for simplicity, other weaves, such as the weaves shown in FIGS. 3C, 3D or 3F to 3J may alternatively be used.

Although the foregoing refers to particular preferred embodiments, it will be understood that the invention is not so limited. It will occur to those of ordinary skill in the art that various modifications may be made to the disclosed embodiments and that such modifications are intended to be within the scope of the invention. All of the publications, patent applications and patents cited herein are incorporated herein by reference in their entirety.

**The invention also refers to the following embodiments, wherein the term "claim" means "embodiment":**
1. An electrochemical cell stack, comprising:
   at least two electrochemical cells that each comprise a fuel electrode, an air electrode, and an electrolyte located between the fuel electrode and the air electrode;
   at least one interconnect located between the at least two electrochemical cells; and
   a contact layer that electrically connects the at least one interconnect and the fuel electrode of an adjacent one of the at least two electrochemical cells, the contact layer comprising:
      first wires that extend in a first direction, the first wires comprising thinner first wires and thicker first wires, the thicker first wires having a thickness that is larger than a thickness of the thinner first wires; and
      second wires that extend in a second direction different from the first direction.
2. The electrochemical cell stack of claim 1, wherein:
   the contact layer comprises at least one wire mesh; and
   the thicker first wires have a diameter that is larger than a diameter of the thinner first wires.
3. The electrochemical cell stack of claim 2, wherein:
   a diameter of the second wires ranges from about 40 µm to about 60 µm;
   the diameter of the thinner first wires ranges from about 40 µm to about 60 µm; and
   the diameter of the thicker first wires ranges from about 60 µm to about 90 µm.
4. The electrochemical cell stack of claim 2, wherein the first wires further comprise intermediate first wires having a diameter that is greater than the diameter of thinner first wires and less than the diameter of the thicker first wires.
5. The electrochemical cell stack of claim 2, wherein the first wires further comprise:
   thinner intermediate first wires having a diameter that is greater than the diameter of the thinner first wires and less than the diameter of the thicker first wires; and
   thicker intermediate first wires having a diameter that is greater than the diameter of the thinner intermediate first wires and less than the diameter of the thicker first wires.
6. The electrochemical cell stack of claim 5, wherein:
   the thinner first wires, the thinner intermediate first wires, the thicker intermediate first wires, and the thicker first wires are alternately arranged in each contact layer;
   a diameter of the second wires ranges from about 40 µm to about 60 µm;
   the diameter of the thinner first wires ranges from about 40 µm to about 60 µm;
   the diameter of the thicker first wires ranges from about 70 µm to about 90 µm;
   the diameter of the thinner intermediate first wires ranges from about 50 µm to about 70 µm; and
   the diameter of the thicker intermediate first wires ranges from about 60 µm to about 80 µm.
7. The electrochemical cell stack of claim 1, wherein the first wires and the second wires comprise nickel, a nickel alloy, or a combination thereof.
8. The electrochemical cell stack of claim 7, wherein the second wires and the thinner first wires are softer than the thicker first wires.
9. The electrochemical cell stack of claim 1, wherein the at least two electrochemical cells comprise solid oxide fuel cells.
10. The electrochemical cell stack of claim 1, wherein the at least two electrochemical cells comprise solid oxide electrolyzer cells.
11. The electrochemical cell stack of claim 1, wherein the thicker first wires and the thinner first wires are alternately arranged in the contact layer.
12. The electrochemical cell stack of claim 2, wherein the second wires comprise thinner second wires and thicker second wires that have a diameter that is larger than a diameter of the thinner second wires.
13. The electrochemical cell stack of claim 12, wherein the thinner first wires and the thinner second wires comprise a softer material than the thicker first wires and the thicker second wires.
14. The electrochemical cell stack of claim 13, wherein the thinner first wires and the thinner second wires comprise pure nickel, and the thicker first wires and the thicker second wires comprise a nickel alloy that is harder than the pure nickel.
15. The electrochemical cell stack of claim 12, wherein:
   the diameter of the thinner first wires ranges from about 40 µm to about 60 µm;
   the diameter of the thinner second wires ranges from about 40 µm to about 60 µm;
   the diameter of the thicker first wires ranges from about 60 µm to about 90 µm; and
   the diameter of the thicker second wires ranges from about 60 µm to about 90 µm.
16. The electrochemical cell stack of claim 12, wherein:
   the first wires further comprise intermediate first wires having a diameter that is greater than the diameter of thinner first wires and less than the diameter of the thick first wires; and
   the second wires further comprise thinner intermediate second wires having a diameter that is greater than the diameter of thinner second wires and less than the diameter of the thicker second wires.
17. The electrochemical cell stack of claim 1, wherein the second direction is perpendicular to the first direction.
18. The electrochemical cell stack of claim 1, wherein the first direction and the second direction extend at an angle of at least 10 degrees and less than 90 degrees with respect to each other.
19. The electrochemical cell stack of claim 1, further comprising:
   an end plate located adjacent to the fuel electrode of the other of the at least two electrochemical cells; and
   another contact layer that electrically connects the fuel electrode of the other of the at least two electrochemical cells and the end plate.
20. The electrochemical cell stack of claim 1, wherein the contact layer comprises a single wire mesh, and the second wires are interwoven with the thicker first wires and the thinner first wires in the single wire mesh.
21. The electrochemical cell stack of claim 20, wherein the single wire mesh has a wire density of least 50 wires per inch.
21. The electrochemical cell stack of claim 20, wherein the first wires have a first wire density and the second wires have a second wire density different from the first density.
22. The electrochemical cell stack of claim 1, wherein:
   the contact layer comprises a first wire mesh and a second wire mesh;
   the first wire mesh comprises at least some of the second wires interwoven with the thinner first wires; and
   the second wire mesh comprises additional wires interwoven with the thicker first wires.
23. An electrochemical cell stack, comprising:
   at least two electrochemical cells that each comprise a fuel electrode, an air electrode, and an electrolyte located between the fuel electrode and the air electrode;
   at least one interconnect located between the at least two electrochemical cells; and
   a contact layer that electrically connects the at least one interconnect and the fuel electrode of an adjacent one of the at least two electrochemical cells, the contact layer comprising:
      first wires that extend in a first direction, the first wires comprising a first material having a first hardness; and
      second wires that extend in a second direction different from the first direction, the second wires comprising a second material having a second hardness less than the first hardness.
24. The electrochemical cell stack of claim 23, wherein:
   the contact layer comprises at least one wire mesh; and
   the first wires are thicker than the second wires.
25. The electrochemical cell stack of claim 24, wherein:
   the at least one wire mesh has a plain Dutch weave;
   the first wires comprise warp wires comprising a nickel alloy; and
   the second wires comprise weft wires comprising pure nickel.
26. The electrochemical cell stack of claim 23, wherein the at least two electrochemical cells comprise solid oxide fuel cells or solid oxide electrolyzer cells.
27. The electrochemical cell stack of claim 23, further comprising:
   an end plate located adjacent to the fuel electrode of the other of the at least two electrochemical cells; and
   another contact layer that electrically connects the fuel electrode of the other of the at least two electrochemical cells and the end plate.
28. An electrochemical cell stack, comprising:
   at least two electrochemical cells that each comprise a fuel electrode, an air electrode, and an electrolyte located between the fuel electrode and the air electrode;
   at least one interconnect located between the at least two electrochemical cells; and
   a contact layer that electrically connects the at least one interconnect and the fuel electrode of an adjacent one of the at least two electrochemical cells, the contact layer comprising:
      first wires that extend in a first direction, the first wires having a first wire density; and
      second wires that extend in a second direction different from the first direction, the second wires having a second wire density different than the first density.

## Claims

1. An electrochemical cell stack, comprising:
at least two electrochemical cells that each comprise a fuel electrode, an air electrode, and an electrolyte located between the fuel electrode and the air electrode;
at least one interconnect located between the at least two electrochemical cells; and
a contact layer that electrically connects the at least one interconnect and the fuel electrode of an adjacent one of the at least two electrochemical cells, the contact layer comprising at least one feature (a), (b) or (c):
(a) first wires that extend in a first direction, the first wires comprising thinner first wires and thicker first wires, the thicker first wires having a thickness that is larger than a thickness of the thinner first wires; and second wires that extend in a second direction different from the first direction; or
(b) first wires that extend in a first direction, the first wires comprising a first material having a first hardness; and second wires that extend in a second direction different from the first direction, the second wires comprising a second material having a second hardness less than the first hardness; or
(c) first wires that extend in a first direction, the first wires having a first wire density; and second wires that extend in a second direction different from the first direction, the second wires having a second wire density different than the first density.

2. The electrochemical cell stack of claim 1, wherein:
the contact layer comprises the feature (a);
the contact layer comprises at least one wire mesh; and
the thicker first wires have a diameter that is larger than a diameter of the thinner first wires.

3. The electrochemical cell stack of claim 2, wherein:
a diameter of the second wires ranges from about 40 µm to about 60 µm;
the diameter of the thinner first wires ranges from about 40 µm to about 60 µm; and
the diameter of the thicker first wires ranges from about 60 µm to about 90 µm.

4. The electrochemical cell stack of claim 2, wherein the first wires further comprise intermediate first wires having a diameter that is greater than the diameter of thinner first wires and less than the diameter of the thicker first wires.

5. The electrochemical cell stack of claim 2, wherein:
the first wires further comprise thinner intermediate first wires having a diameter that is greater than the diameter of the thinner first wires and less than the diameter of the thicker first wires; and thicker intermediate first wires having a diameter that is greater than the diameter of the thinner intermediate first wires and less than the diameter of the thicker first wires;
the thinner first wires, the thinner intermediate first wires, the thicker intermediate first wires, and the thicker first wires are alternately arranged in each contact layer;
a diameter of the second wires ranges from about 40 µm to about 60 µm;
the diameter of the thinner first wires ranges from about 40 µm to about 60 µm;
the diameter of the thicker first wires ranges from about 70 µm to about 90 µm;
the diameter of the thinner intermediate first wires ranges from about 50 µm to about 70 µm; and
the diameter of the thicker intermediate first wires ranges from about 60 µm to about 80 µm.

6. The electrochemical cell stack of claim 2, wherein:
the first wires and the second wires comprise nickel, a nickel alloy, or a combination thereof; and
the second wires and the thinner first wires are softer than the thicker first wires.

7. The electrochemical cell stack of claim 2, wherein the thicker first wires and the thinner first wires are alternately arranged in the contact layer.

8. The electrochemical cell stack of claim 2, wherein:
the second wires comprise thinner second wires and thicker second wires that have a diameter that is larger than a diameter of the thinner second wires;
the thinner first wires and the thinner second wires comprise a softer material than the thicker first wires and the thicker second wires;
the thinner first wires and the thinner second wires comprise pure nickel, and the thicker first wires and the thicker second wires comprise a nickel alloy that is harder than the pure nickel;
the first wires further comprise intermediate first wires having a diameter that is greater than the diameter of thinner first wires and less than the diameter of the thick first wires; and
the second wires further comprise thinner intermediate second wires having a diameter that is greater than the diameter of thinner second wires and less than the diameter of the thicker second wires.

9. The electrochemical cell stack of claim 2, wherein:
the second direction is perpendicular to the first direction; or
the first direction and the second direction extend at an angle of at least 10 degrees and less than 90 degrees with respect to each other.

10. The electrochemical cell stack of claim 2, wherein:
the contact layer comprises a first wire mesh and a second wire mesh;
the first wire mesh comprises at least some of the second wires interwoven with the thinner first wires; and
the second wire mesh comprises additional wires interwoven with the thicker first wires.

11. The electrochemical cell stack of claim 2, further comprising:
an end plate located adjacent to the fuel electrode of the other of the at least two electrochemical cells; and
another contact layer that electrically connects the fuel electrode of the other of the at least two electrochemical cells and the end plate.

12. The electrochemical cell stack of claim 2, wherein:
the contact layer comprises a single wire mesh, and the second wires are interwoven with the thicker first wires and the thinner first wires in the single wire mesh;
the single wire mesh has a wire density of least 50 wires per inch;
the first wires have a first wire density and the second wires have a second wire density different from the first density.

13. The electrochemical cell stack of claim 1, wherein the contact layer comprises the feature (b).

14. The electrochemical cell stack of claim 1, wherein the contact layer comprises the feature (c).

15. The electrochemical cell stack of claim 1, wherein the contact layer comprises two or all three of features (a), (b) and (c).
